# EUROPÄISCHE PATENTSCHRIFT

(11) **EP 1 155 663 B1**
(45) Veröffentlichungstag und Bekanntmachung des Hinweises auf die Patenterteilung: **13.10.2004**
(21) Anmeldenummer: 01106949.9
(22) Anmeldetag: 20.03.2001
(51) Int. Cl.: A61C 19/10

(54) **Farbfestlegungsvorrichtung sowie Verfahren zur Bestimmung und Festlegung von Farben für Zähne und Zahnrestaurationen**
Colour definition device as well as a method for determining and defining the colours for teeth and dental restorations
Dispositif de définition de la couleur, ainsi que méthode pour la détermination et la définition de couleurs pour dents et restaurations dentaires

(30) Priorität: 16.05.2000 DE 10023840
(43) Veröffentlichungstag der Anmeldung: 21.11.2001
(73) Patentinhaber: Firma Ivoclar Vivadent AG, 9494 Schaan (LI)
(72) Erfinder: Kerschbaumer, Harald, 6833 Klaus (AT); Ospelt, Armin, 9490 Vaduz (LI)
(74) Vertreter: Baronetzky, Klaus, Dipl.-Ing.

(56) Entgegenhaltungen:
- DE-A- 2 641 740
- US-A- 5 240 414
- US-A- 5 624 262
- US-A- 5 725 372
- US-A- 5 766 006

## Beschreibung

Die Erfindung betrifft eine Farbfestlegungsvorrichtung für Zähne und Zahnrestaurationen sowie ein Verfahren zur Bestimmung und Festlegung von Farben für Zähne und Zahnrestaurationen, gemäß Ansprüche 1 bzw. 24.

Eine derartige Farbfestlegungsvorrichtung und ein derartiges Verfahren sind aus der US-PS 57 66 006 bekannt. Diese Lösung stellt bereits einen Fortschritt gegenüber der Verwendung eines üblichen Farbschlüssels dar. Ein handelsüblicher Farbschlüssel weist mehrere Farbgruppen auf, wobei in jeder Gruppe Zähne in unterschiedlicher Farbsättigung und Helligkeit untergebracht sind und jede Gruppe einer bestimmten Farbe zugeordnet ist. Der Zahn eines Farbschlüssels kann einen bis zu 5-schichtigen Aufbau aufweisen.

Ein derartiger Farbschlüssel hat eine begrenzte Auswahlmöglichkeit, wobei die Begrenzung nicht auf die mangelnde Möglichkeit zurückzuführen ist, unterschiedliche Farbmischungen herzustellen, sondern darauf, daß auch erfahrene Zahnärzte nur begrenzt einen Farbton als stimmig festlegen können. Dies liegt zum einen an einer Ermüdung des Auges nach längerem Vergleich, insbesondere aber an der Tatsache, daß das Auge den natürlichen Zahn wie auch den per Farbschlüssel danebengehaltenen Ersatzzahn "integrierend" betrachten muß, um das Vergleichsergebnis bereitzustellen. Der Zahn des Farbschlüssels hat in der Regel einen zweischichtigen Aufbau und eine Gesamtstärke von ca. 5mm, wobei im inzisalen Bereich Zahnschmelzmasse stärker und im zervikalen Bereich Dentinmasse stärker aufgebracht ist.

Ein weiteres Problem bei der Beurteilungsfähigkeit der Referenzzähne des Farbschlüssels liegt darin begründet, daß die Zähne des Farbschlüssels regelmäßig aus hoch gebrannter Keramik bestehen. Derartige Keramiken sind zwar preisgünstiger herzustellen, aber nachdem die Farbschlüssel an alle Zahnärzte verteilt werden müssen, spielen die Herstellkosten eine beträchtliche Rolle. Jedoch werden heutzutage vielfach auch andere Keramiken mit bei geringeren Temperaturen als beispielsweise 1300° gebrannten Keramiken verwendet. Die neuesten Materialien für die Zahnrestauration weisen immer zahnähnlichere optische Eigenschaften auf, wie z.B. opale Effekte oder Helligkeitswerte durch genau definierte Kristallgrößen, wobei der Lichtbrechungsindex eingestellt wird. Die bislang verwendeten Farbschlüssel sind im Grunde wenig für einen Farbvergleich mit diesen neuen Materialien geeignet. Zu den neuen Materialien gehören auch die Materialen d.SIGN und Empress 2, die eine verbesserte Helligkeit trotz besserer Transluzenz aufweisen. Die bislang verwendeten Farbschlüssel sind im Grunde wenig für den Farbvergleich bei diesen neuen Materialien geeignet.

Hier helfen auch Systeme wie das aus der vorstehend genannten US-Patentschrift bekannte System nicht, denn diese verwenden die bekannten Farbschlüssel als Referenz. Nachdem diese aber trotz des zahnförmigen Aufbaus in ihrer Farbwirkung gerade bei besonders transluzenten Zähnen nicht stimmig sind, ergeben derartige computergestützte Systeme trotz des erforderlichen Aufwands nur geringfügige Verbesserungen.

Ein weiteres Problem, das mit den bislang bekannten Systemen nicht oder nur unzureichend bekämpft werden konnte, ist der Verlauf sowohl von Farbe als auch von Transluzenz vom Cervikal- zum Inzisalbereich. Der Cervikalbereich weist regelmäßig eine etwas ins Rötlichere neigende Farbgebung auf und ist wenig transparent. Diesen Abstufungen wird im Stand der Technik nicht oder nur in geringem Maße Rechnung getragen.

Daher liegt der Erfindung die Aufgabe zugrunde, eine Farbfestlegungsvorrichtung gemäß Anspruch 1 sowie ein entsprechendes Verfahren gemäß Anspruch 24 zu schaffen, die in der Lage sind, einen Zahn oder eine Zahnrestauration in einer äthetisch befriedigenderen Weise bereitzustellen, wobei dem Zahnarzt der Farbabgleich deutlich erleichtert wird und insbesondere die erzielte Farbgebung und Transluzenz zu den Nachbarzähnen oder Nachbarbereichen der Restauration paßt.

Diese Aufgabe wird erfindungsgemäß durch die Ansprüche 1 bzw. 17 gelöst. Vorteilhafte Weiterbildungen ergeben sich aus den Unteransprüchen.

Überraschend läßt sich mit den erfindungsgemäßen Maßnahmen tatsächlich zum ersten Mal eine auch vom für das menschliche Auge zutreffenden Eindruck her adäquate Farbgebung für den zu ersetzenden Zahn oder die Zahnrestauration erzielen. Dies liegt insbesondere darin begründet, daß die Referenzmuster in den Schichtstärken bereitgestellt werden, die den tatsächlichen Schichtstärken der aufzubringenden Schneidemasse und der aufzubringenden Dentinmasse entsprechen. Überraschend läßt sich mit dieser Maßnahme, auch wenn die Referenzmuster keine Zahnform aufweisen, eine verbesserte Naturtreue erzielen, denn durch die Bildaufnahme mit der gleichen Kamera fließt dann die gleiche Beurteilung in den Erfassungsprozeß des natürlichen Zahns und des Referenzmusters mit ein. Es versteht sich, daß in diesem Zusammenhang eine Referenzierung der Farben wichtig ist, wenn nicht die gleiche Kamera, sondern eine baugleiche verwendet wird. Um Metamerieeffekte auszuschließen, ist es insofern güstig, die gleiche Beleuchtungssituation bereitzustellen.

Erfindungsgemäß ist es günstig, daß die Schichtstärken entsprechend den in der Praxis vorkommenden Schichtstärken gewählt werden können. Beispielsweise kann ein Satz Referenzmuster mit der Schichtstärke Schneidemasse 0,2mm, Dentin 1mm und Opaker 0,1mm und ein weiterer Satz Referenzmuster mit der Schichtstärke Schneide 0,2mm, Dentinmasse 0,3mm und Opaker 0,1mm, ein weiterer Satz mit der Schichtenfolge Schneidemasse 0,15mm, Dentin 0,4mm, Deep Dentin 0,3mm und Opaker 0,1mm hergestellt werden.

Erfindungsgemäß besonders günstig in diesem Zusammenhang ist es, daß die Anpassung an unterschiedliche Farbgebungen durch Vergleich automatisch erfolgen kann. Bevorzugt in diesem Zusammenhang ist es, wenn auf dem Bildschirm der aufgenommene natürliche Zahn dargestellt ist und Teilbereiche dieses Zahns in geeigneter Weise markiert werden, und dann bei entsprechender Anwahl der Ermittlung des Referenzmusters gleich das zutreffende Referenzmuster festgelegt wird. Erfindungsgemäß insofern besonders günstig ist es, wenn die Referenzmuster aus Originalmassen in Originalschichtstärke gebrannt worden sind, ohne daß Kostengesichtspunkte dagegen sprechen. Vielmehr ist es nicht mehr erforderlich, Farbschlüssel selbst zu verteilen; Referenzmuster können vielmehr in Laborqualität einfach erzeugt werden, und dann mit einer Referenzkamera die entsprechend erfaßbaren Parameter der Referenzmuster aufgenommen und in einer Datenbank abgespeichert werden. Auch wenn die Beschaffung der Aufnahmevorrichtung und der erforderlichen Software eine gewisse Investition darstellt, lassen sich modifizierte Farben bei der Neuentwicklung von Materialien oder anderen Farbgestaltungen dann ohne weiteres per Update dem Zahnarzt oder Zahntechniker zur Verfügung stellen.

Die Genauigkeit des Abgleichs kann erfindungsgemäß je nach der Vielzahl der in der Datenbank zur Verfügung stehenden Referenzmuster soweit getrieben werden, daß Unterschiede nicht mehr sichtbar sind. Erfindungsgemäß ist es günstig, wenn die zu erfassenden Bereiche des Zahns als die regelmäßig besonders kritischen Bereiche vorgegeben sind. Wenn der Zahnarzt von den Vorgaben abweichen will, ist dies durch entsprechende Anwahl anderer Flächen natürlich ohne weiteres möglich, wobei es sich versteht, daß der Zahnarzt auch die Art des von ihm erwünschten Materials, also beispielsweise Kunststoff oder Keramik, vorgibt, sowie auch vorgibt, ob Opaker als Verblendung für metallisches Gerüst eingesetzt wird oder nicht.

Erfindungsgemäß ist es besonders günstig, daß die Farbbestimmungsvorrichtung für jeden Teilbereich des Zahns oder der Zahnrestauration, die mit dem erfaßten natürlichen Zahn harmonisieren sollte, die Schichtungen hinsichtlich Materialwahl, Schichtstärke und Kombination der Materialien festlegt. Das Dentallabor erhält so genaue Vorgaben, in welcher Weise die Restauration zu erfolgen hat. Hierbei ist es auch möglich, den zu treibenden Aufwand in verschiedenen Stufen vorzuwählen. Beispielsweise kann ein Schalter für "komplex" und "einfach" vorgesehen sein, der dann je nach Wahl aufwendigere oder einfachere Schichtungen vorgibt.

Ein weiterer Parameter, der für den Abgleich mit dem Referenzmuster von dem Zahnarzt oder ggf. von dem Zahntechniker festgelegt werden muß, ist die Schichtstärke, die ihm für den Restaurationsfall zur Verfügung steht. Auch hierbei erfolgt insofern automatisch ein Abgleich mit der besten Möglichkeit, nachdem die Referenzmuster in unterschiedlichen Gesamt-Schichtstärken vorliegen, so daß auch die insofern unterschiedlichen Farbeindrücke berücksichtigt werden und automatisch in die Beurteilung mit einfließen können.

Weitere Vorteile, Einzelheiten und Merkmale ergeben sich aus der nachfolgenden Beschreibung ihrer Ausführungsbeispiele anhand der Zeichnung. Es zeigen:
- Fig. 1: eine perspektivische Schnittansicht eines ersten Referenzmusters;
- Fig. 2: eine perspektivische Ansicht eines zweiten Referenzmusters;
- Fig. 3: eine perspektivische Ansicht eines dritten Referenzmusters;
- Fig. 4: eine perspektivische Ansicht einer Aufnahmehülse;
- Fig. 5: eine Darstellung einer Bildschirmansicht einer erfindungsgemäßen Farbfestlegungsvorrichtung;
- Fig. 6: eine Darstellung einer anderen Feldaufteilung gemäß Fig. 5;
- Fig. 7: eine Darstellung mit horizontaler Teilung in zwei Alternativen;
- Fig. 8: eine Darstellung einer Feldaufteilung mit variablen Feldern;
- Fig. 9: eine Darstellung einer Feldaufteilung mit vertikalen Feldern; und
- Fig. 10: eine Darstellung einer Feldaufteilung im Kombination der vertikalen und der horizontalen Aufteilung

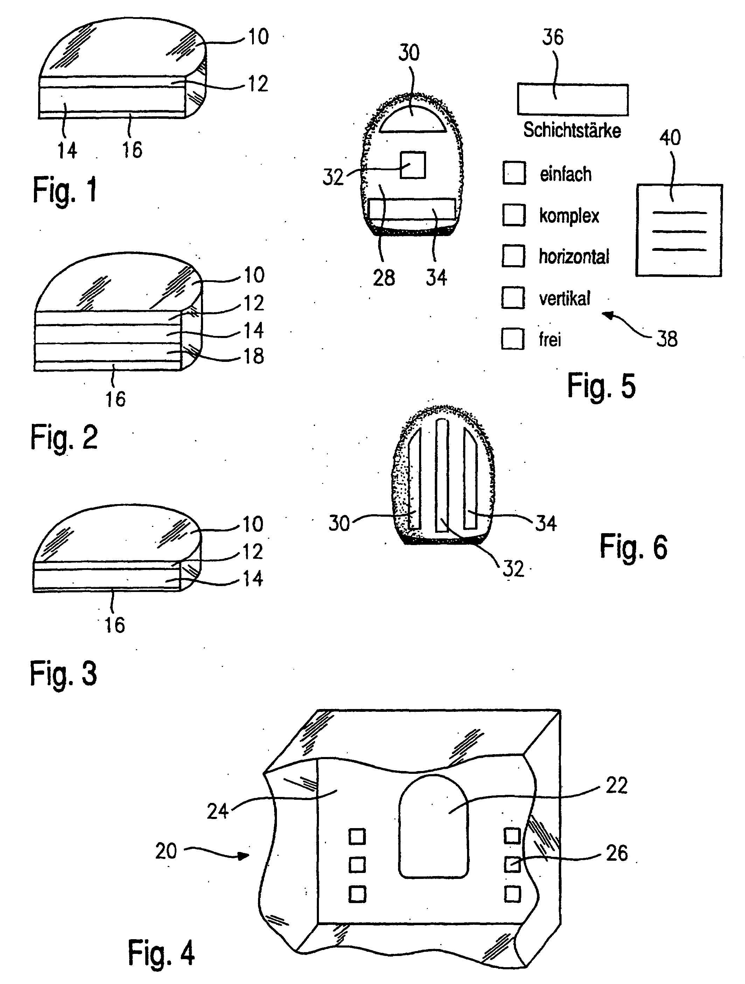

Fig. 1 zeigt ein Referenzmuster als Beispiel für eine Vielzahl ähnlicher Referenzmuster in gleicher Schichtstärke, bei unterschiedlichen Farbgebungen der einzelnen Schichten. Das Referenzmuster 10 ist in dem dargestellten Ausführungsbeispiel als kreisrunde Tablette ausgebildet, wobei es sich versteht, daß beliebige andere Formen auch in Betracht kommen. Es weist eine Gesamt-Stärke von 0,8mm auf. Das Referenzmuster besteht aus drei Schichten, nämlich einer Schmelzmassenschicht 12 von 0,2mm, einer Dentinmassenschicht 14 von 0,5mm und einer Opakerschicht 16 von 0,1mm.

Derartige Referenzmuster werden nun in zahlreichen Kombinationen in dieser Schichtstärke hergestellt und mittels einer Digitalkamera erfaßt. Der Durchmesser einer Referenzmusterscheide 10 beträgt beispielsweise 10mm, ist also regelmäßig größer als ein Zahn in einer labialen oder bukkalen Ansicht. Beispielsweise können in diesem Schichtaufbau 24 Referenzmuster hergestellt werden, die unterschiedliche Farbgebungen für die drei vorgesehenen Schichten, also Schmelzmasse 12, Dentalmasse 14 und Opakerschicht 16, umfassen. Die Referenzmuster sind aus Originalmassen hergestellt, beispielsweise den Farbstandards der Dentalkeramik d.SIGN der vorliegenden Anmelderin, so daß sie den tatsächlichen Schichtungen am Zahn entsprechen.

Fig. 2 zeigt einen modifizierten Aufbau eines Referenzmusters. Die Gesamt-Schichtstärke des Referenzmusters 10 gemäß Fig. 2 beträgt 1,3mm. Aus Gründen der einfacheren Darstellung sind die Schichtstärken in den Figuren 1 bis 3 im Verhältnis zum Durchmesser des Referenzmusters übertrieben dargestellt. Die Schmelzmasse 12 weist eine Stärke von 0,3mm auf. Hieran schließt sich eine Dentinmassenschicht 14 in der Schichtstärke 0,4mm an. Hieran schließt sich eine Schicht aus einer Deep-Dentinmasse 18 an, die eine Stärke von ebenfalls 0,4mm aufweist. Als unterste Schicht ist wiederum eine Opakerschicht 16 in einer Stärke von 0,2mm vorgesehen.

Es versteht sich, daß aus Gründen der besseren Handhabung die Referenzmuster auch auf einer beliebigen Basiskeramik aufgebracht sein können. Nachdem der Opaker bereits bei einer Stärke von 0,1mm vollständig verblendet, ist die Basisschicht für die Beurteilung der Referenzmuster optisch ohne Belang.

Während die dargestellten Referenzmuster Verblendkeramiken betreffen, die für Restaurationen auf einem metallischen Gerüst vorgesehen sind, versteht es sich, daß in entsprechender Weise auch Referenzmuster aus Keramiken für metallfreie Restaurationen erzeugt werden können. Hierbei kann beispielsweise auf die Keramiken der Produktserie Empress 2 der vorliegenden Anmelderin zurückgegriffen werden. Das gleiche gilt auch für Kunststoffe wie die Restaurationsmassen Targis und Vectris der vorliegenden Anmelderin.

Während das Referenzmuster 10 aus Fig. 1 mit drei Schichten aufgebaut ist, weist das Referenzmuster 10 aus Fig. 2 bereits vier Schichten auf. Das Referenzmuster 10 aus Fig. 2 kann dementsprechend als eher komplex und das Referenzmuster 10 aus Fig. 1 eher als einfach angesehen werden. Es versteht sich, daß es auch möglich ist, anstelle der Deep-Dentin-Masse 18 für das Referenzmuster aus Fig. 2 Clear-Masse zu verwenden, die einen noch transluzenteren Eindruck ergibt.

Aus Fig. 3 ist ein weiteres Referenzmuster 10 ersichtlich, das eine minimale Gesamt-Schichtstärke von nur 0,6mm aufweist. Hier ist eine Kombination von 0,12mm Schmelzmasse 12, 0,4mm Dentinmasse 14 und 0,08mm Opaker 16 vorgesehen.

Es versteht sich, daß dann, wenn zukünftig geeignete Materialien entwickelt werden, die für noch geringere Schichtstärken geegnet sind, diese ebenfalls erfindungsgemäß als Referenzmuster bereitgestellt und erfaßt werden können.

Die Erfassung der Referenzmuster erfolgt bevorzugt in gleicher Weise wie die spätere Erfassung von Zähnen des Patienten. Hierzu ist eine in Fig. 4 schematisch dargestellte Abdeckhülse 20 vorgesehen, die innen schwarz eingefärbt ist und eine Ausnehmung 22 aufweist, die im wesentlichen der Labial- bzw. Bukkalansicht eines Zahns entspricht. Die Ausnehmung 22 ist in einer Stirnwand 24 der innen schwarz vorgesehenen Hülse ausgebildet, während die nicht dargestellte Digitalkamera an der gegenüberliegenden Stirnwand angebracht ist.

Eine derartige Abdeckhülse (20) erfüllt nicht nur die Funktion, daß das Umgebungslicht abgehalten wird; sie gewährleistet auch den richtigen Abstand zwischen Zahn und Optik. Zudem beherbergt sie ein oder mehrere Farbreferenzmuster, die beispielsweise der Schneidenkante benachbart angeordnet sein können.

In einer alternativen Ausgestaltung ist anstelle einer Abdeckung in Zahnform eine Abdeckung in anderere Weise vorgesehen, und in einer weiteren Ausgestaltung ist das Farbreferenzmuster mittels einer geeigneten Halterung unmittelbar unterhalb der Schneidenkante des Zahnes positioniert.

Seitlich der Ausnehmung 22, jedoch deutlich von dieser beabstandet, sind mehrere Referenzfarbenfelder 26 vorgesehen, über die ein Farbabgleich im Einzelfall vorgenommen werden kann. Es ist wichtig, daß diese Referenzfarben äußerst farbstabil sind, so daß es auch in Betracht kommt, sie aus keramischen Materialien herzustellen.

Für die Aufnahme des Referenzmusters wird das Referenzmuster nun jenseits der Ausnehmung 22 plaziert. Es ist größer als die Ausnehmung 22, so daß es die Ausnehmung 22 vollständig abdeckt. Eine Lichtquelle ist in dem dargestellten Ausführungsbeispiel diesseits der Ausnehmung 22 vorgesehen. Entweder kann sie in die Abdeckhülse 20 integriert sein oder von außen angeschlossen sein, wobei die Lichtbeaufschlagung der Stirnwand 24 dann bevorzugt über Spiegel erfolgt. Die Lichtstärke wird beispielsweise durch die Digitalkamera geregelt, so daß stets gleiche Beleuchtungsverhältnisse vorliegen.

Die Referenzmuster, beispielsweise insgesamt 1000 Muster für die unterschiedlichen Materialien in zahlreichen unterschiedlichen Kombinationen von Schichtstärken und Farbgebungen, werden nun nacheinander aufgenommen, und die erfaßten Werte nach den verschiedenen möglichen Parametern der Aufnahme in einer Datenbank abgespeichert und dem jeweiligen Referenzmuster zugeordnet.

Die Daten werden zusammen mit einem entsprechenden Programm und der Digitalkamera und der Abdeckhülse dem Dentallabor oder der Zahnarztpraxis zur Verfügung gestellt. Hierbei kann auf häufig ohnehin vorhandene Computer zurückgegriffen werden. Der Zahnarzt nimmt nun den Patientenzahn auf. Ein Beispiel einer derartigen Aufnahme ist in Fig. 5 dargestellt. Der Techniker oder der Zahnarzt wählt nun je nach Art des Zahns und der zu erstellenden Restauration, ob eine einfache oder komplexe Schichtung in Frage kommt, und auch, welche Schichtstärke zur Verfügung steht. Auch die Art der Aufteilung von Feldern oder Teilbildern läßt sich wählen.

In Fig. 5 ist eine horizontale Teilung eines Patientenzahns 28 dargestellt. Der Patientenzahn 28 soll nach Vorgabe des Zahnarzts in horizontalen Teilbildern erfaßt werden. Hierzu ist ein zervikales Teilbild 30 vorgesehen, das über dem Zahn eingeblendet wird, ein zentrales Teilbild 32 und ein inzisales Teilbild 34. Zusätzlich gibt der Zahnarzt in einem mittleren Bereich des Bildschirms in einem Feld 36 die Schichtstärke an, die dem Zahntechniker zur Verfügung steht. Ferner sind unterhalb des Felds 36 in dem dargestellten Ausführungsbeispiel verschiedene Schaltboxen 38 vorgesehen, die es erlauben, die Schichtung als einfach oder komplex festzulegen, aber auch, ob eine horizontale Teilung, eine vertikale Teilung oder eine freie Erstellung von Teilbildern erwünscht ist. Eine Ansicht mit vertikalen Teilbildern ist in Fig. 6 dargestellt.

Bei freier Wahl von Teilbildern kann der Zahnarzt mit einem geeigneten Zeigerinstrument Felder über dem Zahn aufziehen. Für jedes Teilbild wird ein Mittelwert berechnet und dieser mit der Datenbank verglichen. Das Ergebnis läßt sich aus einem Ergebnisfeld 40 ersehen, daß dem Zahntechniker die Materialwahl nach Farbe, Schichtstärke, Schichtfolge usw. im einzelnen vorgibt.

Es versteht sich, daß die Materialart, also Metallkeramik, metallfreie Keramik oder Kunststoff, entweder von vornherein vorgegeben ist oder über zusätzliche Eingabefelder festgelegt werden kann.

Wie es aus Fig. 5 ersichtlich ist, können die Teilbilder 30, 32 und 34 auch als vertikale Teilbilder vorgesehen sein. In diesem Fall wird dann über den Zahn in seiner Gesamtheit integriert und nach einem vorgegebenen Muster die Schichtstärke so optimiert, daß der inzisale Bereich einen größeren Zahnschmelzmassenanteil und der zervikale Bereich einen größeren Dentinmassenanteil aufweist.

Es versteht sich, daß zahlreiche Modifikationen und Weiterbildungen der erfindungsgemäßen Farbfestlegungsvorrichtung möglich sind, ohne den Bereich der Erfindung zu verlassen. Beispielsweise können die Referenzmuster 10 auch gewölbt hergestellt sein, um auch Randeffekte der Zähne bei der Aufnahme über die Abdeckhülse 20 erfassen zu können. Eine weitere Möglichkeit besteht in der Integration einer Schneidekantenbibliothek. Hierbei werden dem Zahnarzt zu der Aufnahme des Patientenzahns passende Schneidekanten vorgeschlagen, die zuvor in geeigneter Weise hergestellt und ebenfalls abgespeichert worden sind oder beispielsweise aus Patientendaten gewonnen sind. Auch kann der zu erstellende Zahn oder die zu erstellende Zahnrestauration neben dem Patientenzahn eingeblendet werden, um eine virtuelle Restauration und noch verbesserte Beurteilung zu ermöglichen.

Gemäß einer weiteren vorteilhaften Ausgestaltung ist es vorgesehen, auch die Erstellung der Zähne in CIM-Technik von der Farbfestlegungsvorrichtung vornehmen zu lassen.

In einer weiteren Ausgestaltung der erfindungsgemäßen Farbfestigungsvorrichtung ist es vorgesehen, daß der Anmelder ähnlich wie beim bestehenden Bildbearbeitungsprogrammen einen virtuellen Pinsel verwendet und damit seinen Zahn virtuell aufbaut. Hierzu wird ein geeignetes Material, z.B. Opaker, Dentinmasse, Schneidemasse, ausgewählt, die gewünschte Schichtstärke und der Bereich bestimmt, in welchem das Material aufgebaut werden soll. Auf dem Bildschirm ist der erzielte Farbton sofort ersichtlich. Auf diese Art kann Schicht für Schicht aufgebaut werden, wobei der sich ergebende Farb- bzw. Transparenteffekt sofort ersichtlich ist. Da die natürliche Vorlage (der aufgenommene Zahn) in unmittelbarer Nachbarschaft vorliegt, kann die Farbübereinstimmung sowohl optisch als auch über den Vergleich der Farbparameter vorgenommen werden. Mit dieser Technik können auch einzelne Massen ausgetauscht und durch geeignete ersetzt werden, bis der erwünschte Effekt erzielt wird, wobei diese Technik sowohl für Kronenarbeiten, für Brückenarbeiten als auch für direkte und indirekte Füllungen verwendet werden kann.

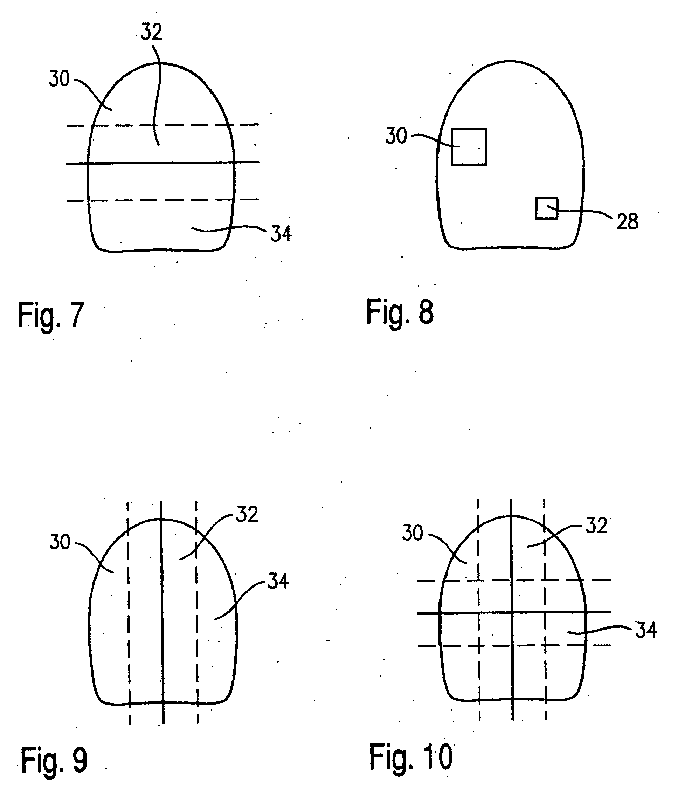

Die Figuren 7 bis 10 zeigen unterschiedliche Ansichten verschiedener Feldaufteilungsmöglichkeiten, wobei gemäß Fig. 10 horizontale und vertikale Teilungen miteinander kombiniert sind.

## Patentansprüche

1. Farbfestlegungsvorrichtung für Zähne und Zahnrestaurationen, mit einem Satz von Referenzmustern für den automatischen Vergleich mit einem Patientenzahn, wobei basierend auf der Farbgebung des Referenzmusters die Farbe eines einzusetzenden Zahns oder einer einzusetzenden Restauration automatisch festlegbar ist, wobei die Referenzmuster (10) in einer Schichtung, also Schichtstärke und/oder Materialwahl, herstellbar sind, die dem einzusetzenden Zahn, der einzusetzenden Zahnrestauration oder der einzusetzenden Füllung entspricht, wobei die erfassbaren Parameter der Referenzmuster (10) aufgenommen und abgespeichert sind, und wobei die Schichtungen für jeden Teilbereich des Zahns oder der Zahnrestauration hinsichtlich Materialwahl, Schichtstärke und Kombination der Materialien abstimmbar und festlegbar sind.

2. Farbfestlegungsvorrichtung nach Anspruch 1, **dadurch gekennzeichnet, daß** die Referenzmuster (10) eine Schichtstärke von 0,3 bis 3 mm, bevorzugt zwischen 1 und 2 mm für die gesamte Schichtstärke von Dentinmasse (14) und Schmelzmasse (12) und gegebenenfalls Opaker (16) aufweisen.

3. Farbfestlegungsvorrichtung nach Anspruch 1 oder 2, **dadurch gekennzeichnet, daß** die Referenzmuster (10) eine einzige Schicht aufweisen.

4. Farbfestlegungsvorrichtung nach einem der Ansprüche 1 oder 2, **dadurch gekennzeichnet, daß** die Referenzmuster (10) so hergestellt sind, daß Dentinmaterial, Schneidenmaterial und Opaker auf Dentallegierungen aufgebracht sind.

5. Farbfestlegungsvorrichtung nach einem der Ansprüche 1 oder 2, **dadurch gekennzeichnet, daß** die Referenzmuster (10) Gerüstwerkstoffe aus hochwertigen Glaskeramiken oder faserverstärkten Kunststoffen aufweisen.

6. Farbfestlegungsvorrichtung nach einem der vorhergehenden Ansprüche, **dadurch gekennzeichnet, daß** die Referenzmuster (10) in einer Datenbank abgelegt sind und das zutreffende Referenzmuster (10) über einen angesteuerten Bereich des wiedergegebenen Patientenzahns (28) adressiert ist.

7. Farbfestlegungsvorrichtung nach einem der vorhergehenden Ansprüche, **dadurch gekennzeichnet, daß** die Referenzmuster (10) unter metamerisch gleichen Umständen wie der Patientenzahn (28) aufgenommen sind.

8. Farbfestlegungsvorrichtung nach einem der vorhergehenden Ansprüche, **dadurch gekennzeichnet, daß** die Referenzmuster (10) mit mindestens hinsichtlich der optischen und elektrischen Eigenschaften baugleichen Kamera wie die Patientenzähne, insbesondere mit einer baugleichen Kamera, aufgenommen sind.

9. Farbfestlegungsvorrichtung nach einem der vorhergehenden Ansprüche, **dadurch gekennzeichnet, daß** der Patientenzahn (28) auf einem Bildschirm wiedergeben ist und durch Markieren eines Bereichs der Darstellung des Patientenzahns das nächstkommende zugehörige Referenzmuster (10) anzeigbar ist.

10. Farbfestlegungsvorrichtung nach einem der vorhergehenden Ansprüche, **dadurch gekennzeichnet, daß** die Farbfestlegungsvorrichtung über den markierten Bereich des Zahnes am Bildschirm integriert und den so ermittelten Wert mit dem Referenzmuster (10) vergleicht.

11. Farbfestlegungsvorrichtung nach Anspruch 10, **dadurch gekennzeichnet, daß** sich der markierte Bereich über den gesamten Zahn oder eine mehrfache vertikale und/oder horizontale Teilung erstreckt.

12. Farbfestlegungsvorrichtung nach einem der Ansprüche 1 bis 10, **dadurch gekennzeichnet, daß** der markierte Bereich sich in einer beliebigen Anzahl und beliebiger Größe freiwählbarer Felder erstreckt.

13. Farbfestlegungsvorrichtung nach Anspruch 12, **dadurch gekennzeichnet, daß** ein ermittelter Wert hinsichtlich der erfaßbaren Parameter wie Farbe, Helligkeit und Sättigung festgelegt wird und über die Vergleichsvorrichtungen ein Referenzmuster (10) ausgewählt wird, bei dem die Summe der Abweichungen der einzelnen Parameter am geringsten ist.

14. Farbfestlegungsvorrichtung nach einem der vorhergehenden Ansprüche, **dadurch gekennzeichnet, daß** für die Aufnahme des Patientenzahns ein Bildaufnahmegerät eingesetzt wird, insbesondere eine Digitalkamera oder auch eine Videokamera, deren Bildausschnitt im wesentlichen dem erfaßten Zahn entspricht.

15. Farbfestlegungsvorrichtung nach Anspruch 14, **dadurch gekennzeichnet, daß** der erfaßte Ausschnitt durch eine Abdeckung (20), insbesondere eine Schwarzabdeckung, festgelegt ist, die eine Durchtrittsausnehmung (22) in Zahnform aufweist.

16. Farbfestlegungsvorrichtung nach Anspruch 15, **dadurch gekennzeichnet, daß** die Abdeckung (20) auch den richtigen Abstand des Zahns zur Optik festlegt.

17. Farbfestlegungsvorrichtung nach einem der vorhergehenden Ansprüche, **dadurch gekennzeichnet, daß** bei der Aufnahme des Patientenzahns dem Patientenzahn (28) benachbart oder unterhalb der Schneidenkante Referenzfelder (26) vorgesehen sind, über welche eine Aufnahmevorrichtung, insbesondere eine Digitalkamera, für die Aufnahme des Patientenzahns kalibrierbar ist.

18. Farbfestlegungsvorrichtung nach einem der vorhergehenden Ansprüche, **dadurch gekennzeichnet, daß** die Farbfestlegungsvorrichtung eine CIM-Vorrichtung steuert, über welche die Schichtung des herzustellenden künstlichen Zahns oder der Zahnrestauration hinsichtlich der Materialwahl und der Schichtstärke festlegbar und der Zahn zumindest vorfertigbar ist.

19. Farbfestlegungsvorrichtung nach einem der vorhergehenden Ansprüche, **dadurch gekennzeichnet, daß** die Referenzmuster (10) bei der gleichen Temperatur und mit der gleichen Brennkurve gebrannt sind wie die Zähne oder Zahnrestaurationen.

20. Farbfestlegungsvorrichtung nach einem der Ansprüche 1 bis 12, **dadurch gekennzeichnet, daß** die Referenzmuster (10) und die Zähne oder Zahnrestaurationen insbesondere lichtund/oder warmehärtbaren Kunststoff aufweisen.

21. Farbfestlegungsvorrichtung nach einem der vorhergehenden Ansprüche, **dadurch gekennzeichnet, daß** vor der Erzeugung des Zahns oder der Zahnrestauration die Bereitstellung des ausgewählten Referenzmusters (10) in Zahnform am Bildschirm einblendbar und so eine virtuelle Zahnrestauration in Zusammenschau mit dem Nachbarzahn überprüfbar ist.

22. Farbfestlegungsvorrichtung nach einem der vorhergehenden Ansprüche, **dadurch gekennzeichnet, daß** die Speichervorrichtung eine Schneidekantenbibiliothek aufweist, die in der Natur vorkommende strukturierte Schneidenkanten, welche aus dem originalmassen nach einem für die Zahntechnik dazu kommunizierenden Schichtaufbau hergestellt sind und eine Mehrzahl von Ausgestaltungen aufweist, die am Bildschirm einblendbar sind, um das Ergebnis der Zahnrestauration bei Auswahl der betreffenden Schneidekantenbibliothek zu beurteilen.

23. Farbfestlegungsvorrichtung nach einem der vorhergehenden Ansprüche, **dadurch gekennzeichnet, daß** zur Erzeugung des Zahns oder der Zahnrestauration eine digitale Aufnahme der Restauration am Bildschirm einblendbar und so ein Vergleich dieser Restauration mit dem Nachbarzahn möglich ist, wobei der Vergleich entweder visuell oder durch Ermittlung und Vergleich der Koordinaten Farbe, Absättigung und Helligkeit erfolgt.

24. Verfahren zur Bestimmung und Festlegung von Farben für Zähne und Zahnrestaurationen, bei welchem ein Satz von Referenzmustern mit einem Patientenzahn automatisch verglichen wird und basierend auf der Farbgebung des Referenzmusters die Farbe eines einzusetzenden Zahns oder einer einzusetzenden Restauration automatisch festgelegt wird, wobei
- die Referenzmuster (10) in einer Schichtung, also Schichtstärke und/oder Materialwahl, hergestellt werden, die dem einzusetzenden Zahn, der einzusetzenden Zahnrestauration oder der einzusetzenden Füllung entspricht, wobei die erfassbaren Parameter der Referenzmuster (10) aufgenommen und abgespeichert werden;
- der natürliche Zahn aufgenommen und in Teilbereiche unterteilt wird, wobei die Schichtungen für jeden Teilbereich des Zahns oder der Zahnrestauration hinsichtlich Materialwahl, Schichtstärke und Kombination der Materialien abgestimmt und festgelegt werden.

## Claims

1. Colour defining device for teeth and dental restorations, comprising a set of reference patterns for automatic comparison with a patient's tooth, wherein, based on the colouring of the reference pattern, the colour of a tooth to be used or of a restoration to be used can automatically be defined, wherein the reference patterns (10) can be produced in a layer arrangement, in other words layer thickness and/or material selection, which corresponds to the tooth to be used, the dental restoration to be used or the filling to be used, wherein the detectable parameters of the reference patterns (10) are recorded and stored, and wherein the layer arrangements can be matched and defined for each section of the tooth or of the dental restoration with respect to material selection, layer thickness and combination of materials.

2. Colour defining device according to claim 1, **characterised in that** the reference patterns (10) have a layer thickness of 0.3 to 3 mm, preferably between 1 and 2 mm for the entire layer thickness of dentine compound (14) and melt compound (12) and optionally an opaquer (16).

3. Colour defining device according to either claim 1 or claim 2, **characterised in that** the reference patterns (10) have a single layer.

4. Colour defining device according to either claim 1 or claim 2, **characterised in that** the reference patterns (10) are produced such that dentine material, cutting material and opaquer are provided on dental alloys.

5. Colour defining device according to either claim 1 or claim 2, **characterised in that** the reference patterns (10) comprise skeletal materials made of high-quality glass ceramics or fibre-reinforced plastics materials.

6. Colour defining device according to any one of the preceding claims, **characterised in that** the reference patterns (10) are stored in a database and the relevant reference pattern (10) is addressed via a controlled region of the reproduced patient's tooth (28).

7. Colour defining device according to any one of the preceding claims, **characterised in that** the reference patterns (10) are recorded under conditions metamerically identical to the patient's tooth (28).

8. Colour defining device according to any one of the preceding claims, **characterised in that** the reference patterns (10) are photographed using a camera identical in terms of construction, at least with respect to the optical and electrical properties, to the patient's teeth, in particular using a constructionally identical camera.

9. Colour defining device according to any one of the preceding claims, **characterised in that** the patient's tooth (28) is reproduced on a screen and the closest associated reference pattern (10) can be displayed by marking a region of the depiction of the patient's tooth.

10. Colour defining device according to any one of the preceding claims, **characterised in that** the colour defining device integrates via the marked region of the tooth on the screen and compares the value thus obtained with the reference pattern (10).

11. Colour defining device according to claim 10, **characterised in that** the marked region extends over the entire tooth or a repeated vertical and/or horizontal division.

12. Colour defining device according to any one of claims 1 to 10, **characterised in that** the marked region extends in any number and any size of freely selectable fields.

13. Colour defining device according to claim 12, **characterised in that** an ascertainable value with respect to the detectable parameters such as colour, brightness and saturation is defined and a reference pattern (10) is selected via the comparison devices, in which pattern the sum of the deviations of the individual parameters is at its lowest.

14. Colour defining device according to any one of the preceding claims, **characterised in that** a camera is used for photographing the patient's tooth, in particular a digital camera or a video camera, of which the subject area substantially corresponds to the recorded tooth.

15. Colour defining device according to claim 14, **characterised in that** the recorded detail is defined by a covering (20), in particular a black covering, which has a passage (22) in the shape of a tooth.

16. Colour defining device according to claim 15, **characterised in that** the covering (20) also defines the correct spacing of the tooth from the lens.

17. Colour defining device according to any one of the preceding claims, **characterised in that** when the patient's tooth is photographed, reference fields (26) are provided for the patient's tooth (28) adjacent to or below the cutting edge, via which fields a camera, in particular a digital camera, can be calibrated for photographing the patient's tooth.

18. Colour defining device according to any one of the preceding claims, **characterised in that** the colour defining device controls a CIM device via which the layer arrangement of the artificial tooth to be produced or of the dental restoration can be defined with respect to the material selection and the layer thickness and the tooth can be at least pre-constructed.

19. Colour defining device according to any one of the preceding claims, **characterised in that** the reference patterns (10) are burnt at the same temperature and with the same burning curve as the teeth or dental restorations.

20. Colour defining device according to any one of claims 1 to 12, **characterised in that** the reference patterns (10) and the teeth or dental restorations comprise, in particular, light- and/or heat-curable plastics material.

21. Colour defining device according to any one of the preceding claims, **characterised in that** before producing the tooth or the dental restoration, the provision of the selected reference pattern (10) can be superimposed in tooth form on the screen and a virtual dental restoration can thus be checked in an overall view with the adjacent tooth.

22. Colour defining device according to any one of the preceding claims, **characterised in that** the storage device comprises a cutting edge library comprising naturally structured cutting edges which are produced from the original compounds according to a layer construction connected therewith for dentistry and comprises a plurality of configurations which can be superimposed on the screen in order to assess the result of the dental restoration when selecting the relevant cutting edge library.

23. Colour defining device according to any one of the preceding claims, **characterised in that** to produce the tooth or the dental restoration, a digital photograph of the restoration can be superimposed on the screen and a comparison of this restoration with the adjacent tooth is thus possible, the comparison taking place either visually or by determining and comparing the coordinates colour, saturation and brightness.

24. Method for determining and defining colours for teeth and dental restorations, wherein a set of reference patterns is automatically compared with a patient's tooth, and based on the colouring of the reference pattern, the colour of a tooth to be used or a restoration to be used is automatically defined, wherein
- the reference patterns (10) are produced in a layer arrangement, in other words layer thickness and/or material selection, which corresponds to the tooth to be used, the dental restoration to be used or the filling to be used, wherein the recordable parameters of the reference patterns (10) are recorded and stored;
- the natural tooth is photographed and divided into sections, wherein the layer arrangements for each section of the tooth or of the dental restoration are matched and defined with respect to material selection, layer thickness and combination of materials.

## Revendications

1. Dispositif de détermination de couleur de dents et de restaurations de dents, avec un jeu de modèles de référence pour la comparaison automatique avec une dent d'un patient, sachant que, se basant sur le coloris du modèle de référence, la couleur d'une dent à implanter ou d'une restauration à implanter peut être déterminée automatiquement, sachant que les modèles de référence (10) sont réalisables dans une structure en couches, c'est-à-dire épaisseur de couche et/ou choix du matériau, qui correspond à la dent à implanter, à la restauration à implanter ou à l'obturation à implanter, sachant que les paramètres des modèles de référence (10) pouvant être saisis sont enregistrés et mémorisés, et sachant que les structures en couches peuvent être harmonisées et définies du point de vue du choix du matériau, de l'épaisseur de la couche et de la combinaison des matériaux pour chaque zone partielle de la dent ou de la restauration.

2. Dispositif de détermination de couleur selon la revendication 1, **caractérisé en ce que** les modèles de référence (10) présentent une épaisseur de couche de 0,3 à 3 mm, de préférence entre 1 et 2 mm pour l'ensemble de l'épaisseur de la masse de dentine (14) et de la masse d'émail (12) et, le cas échéant, d'un opacifiant (16).

3. Dispositif de détermination de couleur selon la revendication 1 ou 2, **caractérisé en ce que** les modèles de référence (10) comportent une seule couche.

4. Dispositif de détermination de couleur selon l'une des revendications 1 ou 2, **caractérisé en ce que** les modèles de référence (10) sont fabriqués de telle sorte que le matériau de dentine, le matériau d'arête de coupe et l'opacifiant sont appliqués sur des alliages dentaires.

5. Dispositif de détermination de couleur selon l'une des revendications 1 ou 2, **caractérisé en ce que** les modèles de référence (10) comprennent des matériaux d'ossature en céramiques de verre de haute qualité ou en plastiques renforcés de fibres.

6. Dispositif de détermination de couleur selon l'une quelconque des revendications précédentes, **caractérisé en ce que** les modèles de référence (10) sont stockés dans une base de données et **en ce que** le modèle de référence (10) qui convient est adressé par l'intermédiaire d'une zone visée de la dent reproduite du patient (28).

7. Dispositif de détermination de couleur selon l'une quelconque des revendications précédentes, **caractérisé en ce que** les modèles de référence (10) sont photographiés sous les mêmes conditions métamériques que la dent du patient (28).

8. Dispositif de détermination de couleur selon l'une quelconque des revendications précédentes, **caractérisé en ce que** les modèles de référence (10) sont photographiés avec un appareil photo de même fabrication, au moins du point de vue des propriétés optiques et électriques, à celui des dents du patient, en particulier avec un appareil photo de même fabrication.

9. Dispositif de détermination de couleur selon l'une quelconque des revendications précédentes, **caractérisé en ce que** la dent du patient (28) est reproduite sur un écran et que, par marquage d'une zone de la représentation de la dent du patient, **en ce que** le modèle de référence (10) correspondant le plus semblable peut être affiché.

10. Dispositif de détermination de couleur selon l'une quelconque des revendications précédentes, **caractérisé en ce que** le dispositif de détermination de couleur procède à une intégration par-dessus la zone marquée de la dent à l'écran et compare la valeur ainsi déterminée au modèle de référence (10).

11. Dispositif de détermination de couleur selon la revendication 10, **caractérisé en ce que** la zone marquée s'étend sur l'ensemble de la dent ou sur une division multiple verticale et/ou horizontale.

12. Dispositif de détermination de couleur selon l'une quelconque des revendications 1 à 10, **caractérisé en ce que** la zone marquée s'étend dans des champs sélectionnables à volonté en nombre quelconque et de taille quelconque.

13. Dispositif de détermination de couleur selon la revendication 12, **caractérisé en ce qu'**une valeur déterminée est définie du point de vue des paramètres saisissables tels la couleur, la clarté et la saturation et **en ce qu'**un modèle de référence (10), pour lequel la somme des écarts des différents paramètres est la plus petite, est choisi par l'intermédiaire des dispositifs de comparaison.

14. Dispositif de détermination de couleur selon l'une quelconque des revendications précédentes, **caractérisé en ce qu'**on utilise pour la prise de vue de la dent du patient un appareil de prise de vue d'images, en particulier un appareil photo numérique ou encore une caméra vidéo, dont le cadrage de l'image correspond essentiellement à la dent saisie.

15. Dispositif de détermination de couleur selon la revendication 14, **caractérisé en ce que** le cadrage saisi est défini par un recouvrement (20), en particulier un recouvrement noir, qui comporte une découpe de passage (22) en forme de dent.

16. Dispositif de détermination de couleur selon la revendication 15, **caractérisé en ce que** le recouvrement (20) définit aussi la distance correcte de la dent à l'optique.

17. Dispositif de détermination de couleur selon l'une quelconque des revendications précédentes, **caractérisé en ce que**, lors de la prise de vue de la dent du patient, des champs de référence (26) sont prévus à côté de la dent du patient 28 ou en dessous de l'arête de coupe, par lesquels on peut calibrer un dispositif de prise de vue, en particulier un appareil photo numérique, pour la prise de vue de la dent du patient.

18. Dispositif de détermination de couleur selon l'une quelconque des revendications précédentes, **caractérisé en ce que** le dispositif de détermination de couleur commande un dispositif CIM, par lequel la structure en couches de la dent artificielle ou de la restauration dentaire à réaliser peut être définie du point de vue du choix du matériau et de l'épaisseur de couche, et par lequel la dent peut être au moins préfabriquée.

19. Dispositif de détermination de couleur selon l'une quelconque des revendications précédentes, **caractérisé en ce que** les modèles de référence (10) sont cuits à la même température et selon la même courbe de cuisson que les dents ou les restaurations dentaires.

20. Dispositif de détermination de couleur selon l'une quelconque des revendications 1 à 12, **caractérisé en ce que** les modèles de référence (10) et les dents ou les restaurations dentaires comportent en particulier du plastique photodurcissable et/ou thermodurcissable.

21. Dispositif de détermination de couleur selon l'une quelconque des revendications précédentes, **caractérisé en ce qu'**avant la fabrication de la dent ou de la restauration dentaire, on peut faire apparaître sur l'écran la mise à disposition en forme de dent du modèle de référence (10) choisi, et contrôler ainsi une restauration virtuelle de la dent vue ensemble avec la dent voisine.

22. Dispositif de détermination de couleur selon l'une quelconque des revendications précédentes, **caractérisé en ce que** le dispositif de mémorisation comporte une bibliothèque d'arêtes de coupe qui comporte des arêtes de coupe structurées existant dans la nature, qui sont fabriquées en les masses d'origine d'après une structure en couche à communiquer pour cela pour la technique dentaire, et qui comporte une pluralité de configurations qui peuvent être appelées à l'écran pour juger du résultat de la restauration dentaire moyennant le choix de la bibliothèque d'arêtes de coupe correspondante.

23. Dispositif de détermination de couleur selon l'une quelconque des revendications précédentes, **caractérisé en ce que**, pour la création de la dent ou de la restauration dentaire, une photo numérique de la restauration peut être appelée à l'écran et **en ce qu'**ainsi une comparaison de cette restauration avec la dent voisine est possible, sachant que la comparaison s'effectue soit visuellement, soit par détermination et comparaison des coordonnées de couleur, de saturation et de clarté.

24. Procédé de définition et de détermination de couleurs pour des dents et des restaurations dentaires, pour lequel un jeu de modèles de référence est comparé automatiquement à la dent d'un patient et, sur la base de la coloration du modèle de référence, la couleur d'une dent à implanter ou d'une restauration à implanter est définie automatiquement, sachant que
- les modèles de référence (10) sont fabriqués dans une structure en couche, c'est-à-dire épaisseur de couche et/ou choix du matériau, qui correspond à la dent à implanter, à la restauration à implanter ou à l'obturation à implanter, sachant que les paramètres saisissables des modèles de référence (10) sont enregistrés et mémorisés ;
- la dent naturelle est photographié et est subdivisée en zones partielles, sachant que la structure en couches pour chaque zone partielle de la dent ou de la restauration dentaire est ajustée et définie du point de vue du choix du matériau, de l'épaisseur de couche et de la combinaison des matériaux.
